# EUROPEAN PATENT APPLICATION

(11) **EP 4 703 854 A1**
(43) Date of publication of application: **04.03.2026**
(21) Application number: 24797015.5
(22) Date of filing: 23.04.2024
(51) Int. Cl.: G06F 3/041, G06F 3/044

(54) **INPUT DEVICE AND DISPLAY DEVICE**

(30) Priority: 24.04.2023 JP 2023070738; 10.08.2023 JP 2023131002
(71) Applicant: Kureha Corporation, Chuo-ku Tokyo 103-8552 (JP)
(72) Inventor: TSUDA, Takuya, Tokyo 103-8552 (JP)
(74) Representative: Hoefer & Partner Patentanwälte mbB
(86) International application number: PCT/JP2024/015917
(87) International publication number: WO 2024/225269

(57) **Abstract**

A technique for detecting a touch position and a pressing force substantially simultaneously with high sensitivity is disclosed. An input device according to an aspect of the present invention includes a touch sensor and a control unit, in which the touch sensor includes: a piezoelectric film; a first detection conductor facing the piezoelectric film, and made up of divided electrodes having a plurality of electrode portions electrically insulated from each other; and a second detection conductor facing the first detection conductor, and disposed on a side opposite to the first detection conductor with respect to the piezoelectric film, and the control unit is configured to: separate a signal detected from the first detection conductor with the second detection conductor used as a reference potential into a first signal in a commercial power supply frequency band and a second signal in a frequency band other than the commercial power supply frequency band; and detect a touch position using the first signal, and detect a pressing force using the second signal. In addition, an input device according to an aspect of the present invention includes a touch sensor and a control unit, in which the touch sensor includes: a piezoelectric film; a first detection conductor facing the piezoelectric film, and including a plurality of first electrodes linearly disposed along a first straight line and a plurality of second electrodes linearly disposed along a second straight line, the plurality of first electrodes and the plurality of second electrodes being electrically insulated from each other; and a second detection conductor facing the first detection conductor, and disposed on a side opposite to the first detection conductor with respect to the piezoelectric film, and the control unit is configured to: separate a signal detected from the first detection conductor with the second detection conductor used as a reference potential into a first signal in a commercial power supply frequency band and a second signal in a frequency band other than the commercial power supply frequency band; and detect a touch position using the first signal, and detect a pressing force using the second signal.

## Description

### [TECHNICAL FIELD]

The present invention relates to an input device and a display device.

### [BACKGROUND ART]

Various known touch type input devices that detect an operation input upon contact with an operation surface have been proposed. As such a touch input device, a three-dimensional (3D) touch sensor that performs position detection and pressure detection (a touch sensor that detects a position (2D) and a pressure (1D)) has been proposed.

For example, Patent Document 1 discloses a touch panel formed by stacking a piezoelectric sensor and a position detection sensor. The piezoelectric sensor and the position detection sensor are connected to a pressing force detection circuit and a touch position detection circuit, respectively. Here, when a position detection sensor of capacitance type is used as the position detection sensor, the touch position can be detected by a change in capacitance, so that the touch position can be detected only by lightly touching the operation surface. However, as disclosed in Patent Document 1, in a system using separate electronics for sensing a change in pressure (pressing force) and a change in capacitance, there is a problem that the touch panel is larger in size and more expensive.

One conceivable solution to this problem is to use common electronics to sense changes in pressure and changes in capacitance.

For example, Patent Document 2 discloses a thin touch-type input device in which a laminate is formed in which a piezoelectric film is sandwiched between a first detection conductor and a second detection conductor, and both pressing force detection and touch position detection (capacitance type) are performed using a detection signal output via the first detection conductor and the second detection conductor.

### [CITATION LIST]

### [PATENT DOCUMENT]

Patent Document 1: WO 2015/046289
Patent Document 2: WO 2014/192786

### [SUMMARY OF INVENTION]

### [TECHNICAL PROBLEM]

However, in the touch type input device disclosed in Patent Document 2, it is necessary to perform the pressing force detection and the touch position detection while switching between the pressing force detection and the touch position detection. There is a concern that polarization of the piezoelectric film caused by the pressing force at the time of touch position detection may be relaxed and the detection sensitivity to the pressing force may decrease. In addition, in the touch type input device disclosed in Patent Document 2, the pressing force detection and the touch position detection are not executed at the same time, and 10 milliseconds (100 Hz) is exemplified as a switching interval between the pressing force detection and the touch position detection. Here, in order to detect pressing by one touch of a finger, the touch usually continues for 100 milliseconds or more. Therefore, in the touch type input device disclosed in Patent Document 2 in which the detection can be performed only intermittently in a period of 100 milliseconds or more, there is a concern that the detection accuracy for the pressing may decrease.

In view of the above, an object of the present invention is to provide a technique capable of detecting a touch position and a pressing force substantially simultaneously with high sensitivity.

### [SOLUTION TO PROBLEM]

An input device according to an aspect of the present invention includes a touch sensor and a control unit, in which the touch sensor includes: a piezoelectric film; a first detection conductor facing the piezoelectric film, and made up of divided electrodes having a plurality of electrode portions electrically insulated from each other; and a second detection conductor facing the first detection conductor, and disposed on a side opposite to the first detection conductor with respect to the piezoelectric film, and the control unit is configured to: separate a signal detected from the first detection conductor with the second detection conductor used as a reference potential into a first signal in a commercial power supply frequency band and a second signal in a frequency band other than the commercial power supply frequency band; and detect a touch position using the first signal, and detect a pressing force using the second signal.

In addition, an input device according to an aspect of the present invention includes a touch sensor and a control unit, in which the touch sensor includes: a piezoelectric film; a first detection conductor facing the piezoelectric film, and including a plurality of first electrodes linearly disposed along a first straight line and a plurality of second electrodes linearly disposed along a second straight line, the plurality of first electrodes and the plurality of second electrodes being electrically insulated from each other; and a second detection conductor facing the first detection conductor, and disposed on a side opposite to the first detection conductor with respect to the piezoelectric film, and the control unit is configured to: separate a signal detected from the first detection conductor with the second detection conductor used as a reference potential into a first signal in a commercial power supply frequency band and a second signal in a frequency band other than the commercial power supply frequency band; and detect a touch position using the first signal, and detect a pressing force using the second signal.

### [ADVANTAGEOUS EFFECTS OF INVENTION]

According to an aspect of the present invention, it is possible to detect a touch position and a pressing force substantially simultaneously with high sensitivity.

### [BRIEF DESCRIPTION OF THE DRAWINGS]

FIG. 1 is an external perspective view of an exemplary display device according to a first embodiment of the present invention.
FIG. 2 is a side cross-sectional view of the exemplary display device according to the first embodiment.
FIG. 3 is an explanatory diagram for explaining a configuration of the exemplary display device according to the first embodiment.
FIG. 4 is an explanatory diagram for explaining an example of processing of a signal processing unit of the exemplary display device according to the first embodiment.
FIG. 5 is a diagram illustrating an example of filter frequency characteristics of a filter used by a signal processing unit of an exemplary display device according to the first embodiment and a modification example thereof to extract a piezoelectric signal.
FIG. 6 is an explanatory diagram for explaining an example of processing of a signal processing unit of an exemplary display device according to a modification of the first embodiment.
FIG. 7 is a diagram illustrating an example of filter frequency characteristics of a filter used to extract a signal of a commercial power supply frequency band component of the exemplary display device according to the first embodiment and the modification thereof.
FIG. 8A is a diagram illustrating an example of digital signal after the signal processing unit processes the signal detected from an electrode touched by the finger.
FIG. 8B is a diagram illustrating an example of digital signal after the signal processing unit processes the signal detected from the electrode touched by the finger.
FIG. 8C is a diagram illustrating an example of digital signal after the signal processing unit processes the signal detected from the electrode touched by the finger.
FIG. 9A is a diagram illustrating an example of digital signal after the signal processing unit processes the signal detected from the electrode that is not touched by the finger and adjacent to the electrode touched by the finger.
FIG. 9B is a diagram illustrating an example of digital signal after the signal processing unit processes the signal detected from the electrode that is not touched by the finger and adjacent to the electrode touched by the finger.
FIG. 9C is a diagram illustrating an example of digital signal after the signal processing unit processes the signal detected from the electrode that is not touched by the finger and adjacent to the electrode touched by the finger.
FIG. 10A is a diagram illustrating a signal-B in each of FIG. 8B and FIG. 9B with respect to time on the horizontal axis.
FIG. 10B is a diagram illustrating a signal obtained by performing fast Fourier transform (FFT) on a section from 1.00 second to 1.25 seconds in FIG. 10A.
FIG. 11A is a diagram illustrating a configuration example of an exemplary first detection conductor according to a second embodiment.
FIG. 11B is a diagram illustrating exemplary row-electrodes according to the second embodiment.
FIG. 11C is a diagram illustrating exemplary column-electrodes according to the second embodiment.
FIG. 11D is a diagram illustrating exemplary row-electrodes and column-electrodes according to the second embodiment.
FIG. 12 is an explanatory diagram for explaining a configuration of an exemplary display device according to the second embodiment.
FIG. 13A is a diagram illustrating a configuration example of an exemplary first detection conductor according to a third embodiment of the present invention.
FIG. 13B is a diagram illustrating exemplary row-electrodes and column-electrodes according to the third embodiment.
FIG. 13C is a side cross-sectional view of an exemplary first detection conductor according to the third embodiment.
FIG. 14 is a diagram illustrating a configuration example of an exemplary first detection conductor according to a fourth embodiment of the present invention.

### [DESCRIPTION OF EMBODIMENTS]

### Underlying Knowledge Forming Basis of the Present Invention

When a finger is brought close to a detection electrode of a piezoelectric sensor during pressing force detection using the piezoelectric sensor, a noise component (generally known as hum or humming noise) dependent on a commercial power supply frequency is observed in a signal from the detection electrode.

Here, the commercial power supply frequency means a power supply frequency of an alternating current supplied as a commercial power supply. The commercial power supply frequency may vary depending on countries or regions. For example, the commercial power supply frequency in Japan is 50 Hz or 60 Hz. The noise component (humming noise) dependent on the commercial power supply frequency may be referred to as commercial power supply frequency noise, commercial power supply frequency-dependent noise, or the like.

In general, since the noise component is not used for pressing force detection, the noise component is removed by a band cut filter or the like. However, as a result of intensive studies, the inventor of the present invention has found that separation of the noise component can be used to detect the presence or absence of a touch by a finger. Therefore, an embodiment for detecting a touch position and a pressing force using the commercial power supply frequency noise will be described below.

Hereinafter, embodiments of the present invention will be described in detail with reference to the drawings as appropriate. However, an unnecessarily detailed description may be omitted. For example, detailed description of already well-known matters and redundant description of substantially the same configuration may be omitted. This is to avoid unnecessarily redundant descriptions and to facilitate understanding for those skilled in the art.

The accompanying drawings and the following descriptions are provided for those skilled in the art to fully understand the present invention, and are not intended to limit the subject matter described in the appended claims. It should be noted that the elements illustrated in the various figures are not necessarily drawn to scale.

### First Embodiment

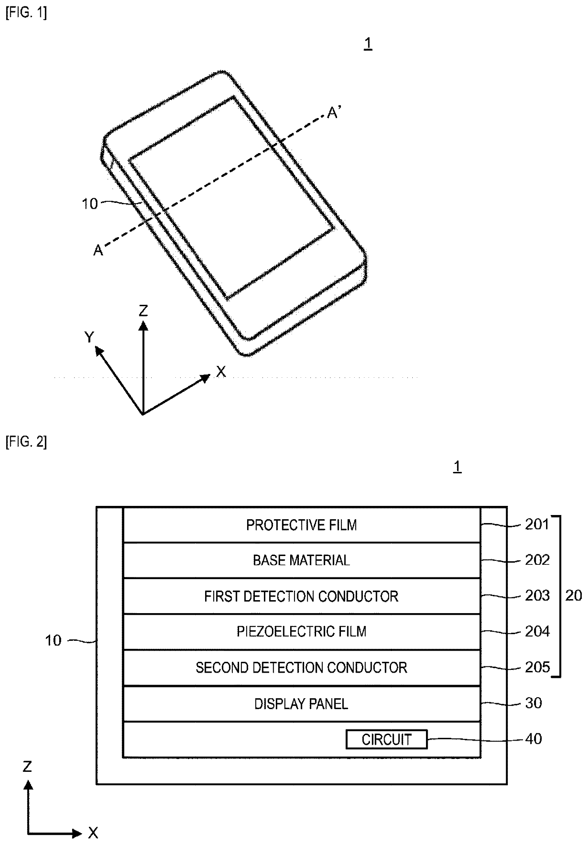

FIG. 1 is an external perspective view of a display device according to a first embodiment of the present invention. Examples of this display device include various devices having a touch detection function, such as a mobile personal computer (PC), a tablet terminal, a smartphone, and a digital camera.

As illustrated in FIG. 1, a display device 1 includes a housing 10 having a substantially rectangular parallelepiped shape. The front surface side (the positive side in the Z direction) of the housing 10 is open. In the present specification and the drawings, a width direction (lateral direction) of the housing 10 is referred to as an X direction, a length direction (longitudinal direction) is referred to as a Y direction, and a thickness direction is referred to as a Z direction (the X axis, the Y axis, and the Z axis are orthogonal to each other). In the present embodiment, the length of the housing 10 in the X direction is shorter than the length of the housing 10 in the Y direction. However, the length in the X direction and the length in the Y direction may be equal, or the length in the X direction may be greater than the length in the Y direction.

FIG. 2 is a side cross-sectional view of the display device according to the present embodiment when cut along the A-A' plane parallel to the XZ plane.

As illustrated in FIG. 2, a touch sensor 20, a display panel 30, various circuits 40 are disposed in the housing 10. The touch sensor 20, the display panel 30, and the various circuits 40 are disposed in this order along the Z direction from the open surface (display surface) side (positive side in the Z-axis direction) of the housing 10. The touch sensor 20 and all or part of the circuits 40 (for example, a control unit or a control circuit) constitute a touch input device.

As illustrated in FIG. 2, the touch sensor 20 includes a protective film (protective layer) 201, a base material 202, a first detection conductor 203, a piezoelectric film 204, and a second detection conductor 205. In the present embodiment, in order to perform the touch position detection and the pressing force detection with higher sensitivity, the first detection conductor 203 is disposed on the open surface side of the housing 10 (that is, closer to the surface to be touched by the finger), and the second detection conductor 205 is disposed on the negative side in the Z-axis direction relative to the first detection conductor 203, so that higher commercial power supply frequency noise is detected.

The protective film 201 is preferably made of glass, is highly transparent, has an insulating property, and has a thickness of about 1 mm (1.1 mm in the present embodiment). The protective film 201 is present on the outermost layer of the open surface, and is disposed on substantially the entire surface of the base material 202 on the open surface side of the housing 10. The protective film 201 serves as an operation surface of the display device 1 and the touch input device. Note that the protective film 201 may be made of a transparent organic material such as an epoxy resin, an inorganic material such as glass, or a mixture thereof.

The base material 202 is disposed on substantially the entire surface of the surface of the protective film 201 opposite to the open surface of the base material 202. The base material 202 is an insulating material having a rectangular flat plate shape, and is made of a material having transparency. In the present embodiment, the base material 202 is not particularly limited, but polyethylene terephthalate (PET), polycarbonate, a cycloolefin polymer (COP), or the like is suitably used.

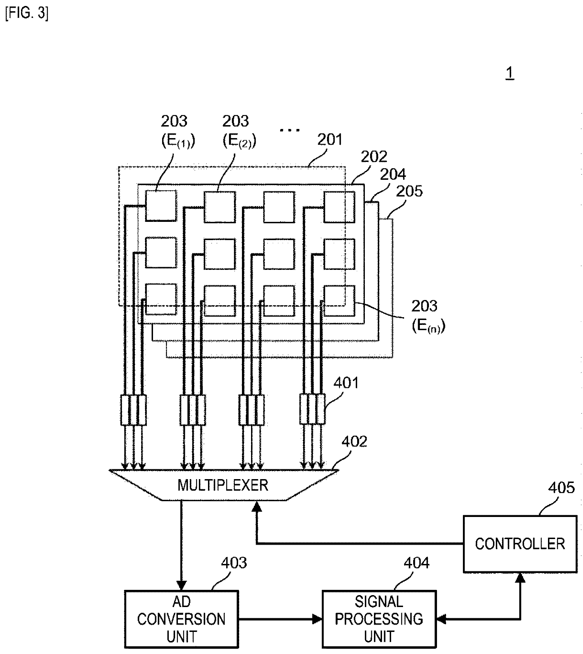

The first detection conductor 203 is disposed on a surface of the base material 202 opposite to a surface in contact with the protective film 201. As described with reference to FIG. 3, the first detection conductor 203 includes a plurality of electrodes. The plurality of electrodes constituting the first detection conductor 203 are arranged in a matrix at intervals along each of the X direction and the Y direction. The first detection conductor 203 is connected to a measurement circuit (including an amplification unit 401, a multiplexer 402, an analog-to-digital (AD) conversion unit 403, and a signal processing unit 404, which will be described later).

The first detection conductor 203, whose base material is a PET film, uses an electrode containing indium tin oxide (ITO) as a main component. Note that other than ITO, an inorganic electrode of zinc oxide (ZnO), a silver nanowire, a carbon nanotube, graphene, or the like, or an organic electrode containing polythiophene, polyaniline, or the like as a main component may be used. By using these materials, a conductor pattern having high transparency can be formed.

Further, the first detection conductor 203 may be obtained by forming a conductor pattern on the protective film 201 of glass or the like. In this case, the base material is unnecessary.

The piezoelectric film 204 has a rectangular flat plate shape having substantially the same size as the base material 202, and is disposed on the surface of the first detection conductor 203 on the side opposite to the open surface side of the housing 10.

Since it is necessary to visually recognize an image on the display panel accurately, it is preferable that the piezoelectric film 204 has excellent transparency and high piezoelectricity. The piezoelectric constant of the piezoelectric film is preferably 5 pC/N or greater, more preferably 10 pC/N or greater, still more preferably 15 pC/N or greater, and particularly preferably 20 pC/N or greater. From the viewpoint of having high piezoelectricity, a film made of a fluorine-based resin is preferable. In the present embodiment, the piezoelectric film 204 is made of polyvinylidene fluoride (PVDF), and its piezoelectric constant d₃₃ is 20 pC/N. The piezoelectric film 204 may be a film made of a chiral polymer. As the chiral polymer, polylactic acid (PLA), particularly, L-type polylactic acid (PLLA) may be used.

The piezoelectric film 204 generates an electric charge when its flat plate surface is pressed. The charge density generated at this time depends on the stress applied to the flat plate surface by the pressing force in the direction (Z direction) orthogonal to the flat plate surface.

The second detection conductor 205 has a rectangular flat plate shape having substantially the same size as the base material 202 and the piezoelectric film 204, and is disposed on substantially the entire surface of the piezoelectric film 204 on the side opposite to the open surface side of the housing 10.

### The second detection conductor 205 is formed of one ITO electrode.

The second detection conductor 205, whose base material is a PET film, is formed of one electrode made of ITO as a conductive material. It is preferable that the detection conductor also has excellent transparency since it is necessary to visually recognize the image on the display panel accurately. Note that as the electrode, in addition to ITO, an inorganic electrode of ZnO, a silver nanowire, a carbon nanotube, graphene, or the like, or an organic electrode containing polythiophene, polyaniline, or the like as a main component may be used. By using these materials, a conductor pattern having high transparency can be formed.

It is desirable that the second detection conductor 205 is connected to the ground potential of a measurement circuit board or a fixed potential having a certain offset voltage from the ground potential to be set as a reference potential. By setting the second detection conductor 205 to the reference potential in this manner, detection signals output via the first detection conductor 203 and the second detection conductor 205 are used for the pressing force detection and the touch position detection.

The base material 202 and the first detection conductor 203 may be vertically interchanged. In other words, in the Z direction, the first detection conductor 203 may be disposed on the positive side, and the base material 202 may be disposed on the negative side.

The touch sensor 20 (located on the positive side in the Z-axis direction relative to the display panel 30) formed by stacking the protective film 201, the base material 202, the first detection conductor 203, the piezoelectric film 204, and the second detection conductor 205 can have a total light transmittance of 80% or more.

As described above, the touch sensor 20 has a structure in which the piezoelectric film 204 is sandwiched between the first detection conductor 203 disposed on the open surface side of the housing 10 from the piezoelectric film 204 and the second detection conductor 205 disposed on the side opposite to the open surface of the housing 10 from the piezoelectric film 204.

When the operation surface is pressed by the finger of an operator of the display device 1, the flat plate surface of the piezoelectric film 204 is curved, and charges corresponding to the pressing force are generated as described above. There is a potential difference caused by the generated charges between the first detection conductor 203 and the second detection conductor 205. A signal from the electrode constituting the first detection conductor 203 includes a piezoelectric signal due to this potential difference. Therefore, by extracting the piezoelectric signal from the signal from the electrode, the extracted piezoelectric signal can be acquired as a detection signal for pressing force detection. Here, the signal (variation) due to the pressing force applied to the piezoelectric film 204 is generally less than 10 Hz (low frequency).

On the other hand, when the finger of the operator of the display device 1 touches the operation surface, a signal from the electrode constituting the first detection conductor 203 and corresponding to the touch position includes commercial power supply frequency noise caused by the proximity of the finger to the electrode. Therefore, by determining the commercial power supply frequency, the position of the electrode that is the source of the noise (signal) can be detected as the touch position.

The display panel 30 is formed of a flat panel display having a liquid crystal display element (not illustrated). The display panel 30 includes a liquid crystal panel, a front polarizing plate, a back polarizing plate, and a backlight (none of which is illustrated). The front polarizing plate and the back polarizing plate are disposed so as to sandwich the liquid crystal panel between them. The backlight is disposed on a side opposite to the liquid crystal panel with respect to the back polarizing plate. The display panel 30 overlaps the touch input device and displays an image. The display panel 30 is not limited to the above-described configuration, and may be any display panel, such as a flat panel display including an organic electro-luminescence (EL) element.

As will be described with reference to FIG. 3, the various circuits 40 include an amplification unit (AMP) 401 (amplification circuit), the multiplexer 402, the analog-digital (AD) conversion unit 403 (AD converter and AD conversion circuit), the signal processing unit 404 (signal processing circuit), and the controller 405, and further include a drive unit (drive circuit; not illustrated) that drives the display panel 30 to control the liquid crystal display element. The various circuits 40 are disposed on the back surface side of the display panel 30. For example, a mounting substrate (not illustrated) is disposed in a space on the back surface side of the display panel 30 in the housing 10, and the various circuits 40 are mounted on the mounting substrate. All or some of the various circuits 40 (for example, the signal processing unit 404 and the controller 405) may be referred to as a control unit or a control circuit.

FIG. 3 is an explanatory diagram for explaining a configuration of the display device according to the present embodiment.

As described above, the first detection conductor 203 is made up of a plurality of electrodes, and the plurality of electrodes are disposed separately from each other. In the present embodiment, the number of the plurality of electrodes is n, including the electrode E₍₁₎, the electrode E₍₂₎, ..., and the electrode E₍ₙ₎.

The plurality of electrodes E₍₁₎ to E₍ₙ₎ are arranged in a matrix along the X direction and the Y direction when viewed from the Z direction. As described above, each of the electrodes E₍₁₎ to E₍ₙ₎, for example, whose base material is a PET film, is an electrode made of ITO, and having a size of 30 mm x 30 mm. However, the size, position, and shape of the electrode are not limited thereto. For example, the shape of the electrode may be hexagonal. Further, for example, in the case of a flat touch panel to be touched by a finger, the first detection conductor 203 is made up of divided electrodes having a plurality of electrode portions electrically insulated from each other. When the electrodes are disposed so as to cover the entire panel, the finger (indirectly) touches (approaches) one or more of the electrodes, and thus the touch position can be identified.

Each of the plurality of electrodes E₍₁₎ to E₍ₙ₎ outputs (transmits) an analog signal to the amplification unit 401.

The amplification unit 401 amplifies the analog signal input (received) from each of the electrodes E₍₁₎ to E₍ₙ₎ to a range of amplitude that can be measured (0 to 3.3 V in the present embodiment), and outputs the amplified analog signal to the multiplexer 402. The number of amplification units 401 is equal to the number of electrodes.

The multiplexer 402 multiplexes the analog signals input from the electrodes via the multiplexer 402. The multiplexer 402 sequentially outputs an amplified analog signal AS₍₁₎ from the electrode E₍₁₎, an amplified analog signal AS₍₂₎ from the electrode E₍₂₎, ..., and an amplified analog signal AS₍ₙ₎ from the electrode E₍ₙ₎ to the AD conversion unit 403 at a constant interval (cycle) (that is, periodically and repeatedly) according to a selection signal input from the controller 405.

The AD conversion unit 403 converts the (amplified) analog signals AS₍₁₎ to AS₍ₙ₎ input from the multiplexer 402 into digital signals DS₍₁₎ to DS₍ₙ₎, respectively, and sequentially outputs the digital signals DS₍₁₎ to DS₍ₙ₎ to the signal processing unit 404. Here, the output of the digital signals from the AD conversion unit 403 to the signal processing unit 404 is continuously and periodically repeated at a constant cycle (for example, 5 milliseconds), where the digital signal DS₍₁₎ to the digital signal DS₍ₙ₎ are output in one cycle. The sampling frequency at the time of AD conversion is at least twice the commercial power supply frequency.

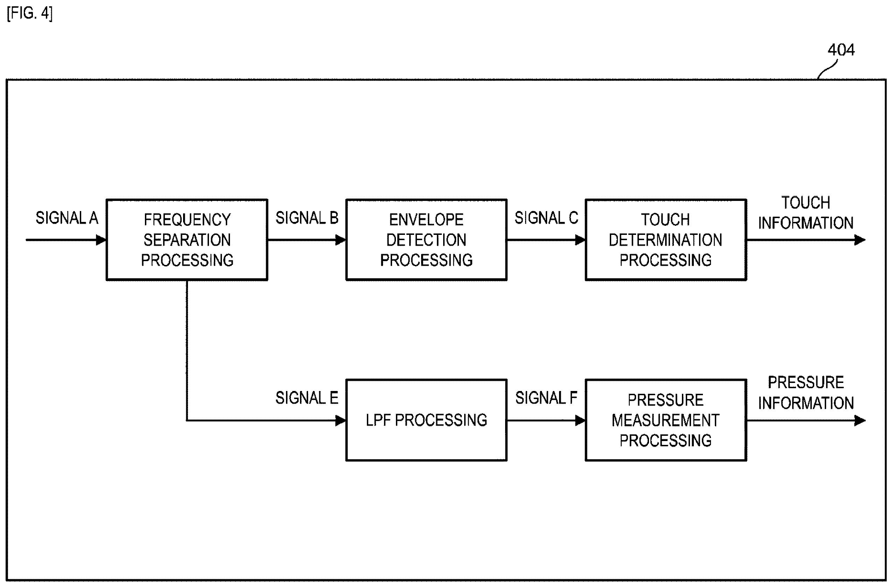

The signal processing unit 404 performs the following processing (frequency separation processing, envelope detection processing, touch determination processing, low-pass filter (LPF) processing, and pressure measurement processing) on the digital signals input from the AD conversion unit 403 at a constant interval (cycle) (that is, periodically and repeatedly) according to the selection signal input from the controller 405. Hereinafter, the processing of the signal processing unit 404 will be described with reference to FIG. 4 as appropriate. Note that the processing executed by the signal processing unit 404 (or the controller 405) described below may be implemented by hardware, may be implemented by software, or may be implemented by a combination of hardware and software.

### Frequency Separation Processing

Before the frequency separation processing, first, the signal processing unit 404 performs offset adjustment on the digital signal input from the AD conversion unit 403. The signal processing unit 404 separates a digital signal A after the offset adjustment into a first signal B (also referred to as a commercial power supply frequency component B) and a second signal E (also referred to as a frequency component E other than the commercial power supply frequency component) (frequency separation processing illustrated in FIG. 4). Specifically, since the commercial power supply frequency noise due to the touch of the finger, and the piezoelectric signal due to the application of the force to the piezoelectric film 204 are superimposed on the digital signal A input from the AD conversion unit 403, the signal processing unit 404 separates the digital signal A into the commercial power supply frequency component B and the frequency component E other than the commercial power supply frequency component including the piezoelectric signal.

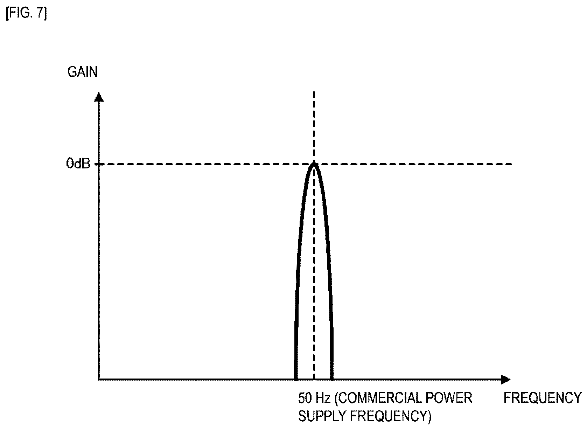

In an example of the frequency separation processing, the signal processing unit 404 may use a commercial power supply frequency band pass filter (band pass filter; for example, a filter having the filter frequency characteristics illustrated in FIG. 7) to separate the digital signal A (after the offset adjustment) input from the AD conversion unit 403 into a commercial power supply frequency component B that has passed through the filter, and a frequency component E other than the commercial power supply frequency component and not passing through the filter. As described above, the signal (variation) due to the pressing force (touch) applied to the piezoelectric film 204 is generally less than 10 Hz, and thus is included in the frequency component E other than the commercial power supply frequency component.

In another example of the frequency separation processing, the signal processing unit 404 may use a notch filter (band-cut filter or band stop filter; not illustrated) to separate the digital signal A (after the offset adjustment) input from the AD conversion unit 403 into a commercial power supply frequency component B that does not pass through the filter, and a frequency component E other than the commercial power supply frequency component and having passed through the filter. In this example, the signal processing unit 404 can obtain the commercial power supply frequency component B by subtracting the frequency component E other than the commercial power supply frequency component from the detected digital signal A.

### Envelope Detection Processing

The signal processing unit 404 performs envelope detection processing for the waveform illustrated in FIG. 4 on the signal B of the commercial power supply frequency component obtained as described above to calculate an envelope signal C. Note that a known technique such as Hilbert transform may be used to obtain the envelope signal C.

### Touch Determination Processing

Since a value of the envelope signal C from the touched electrode is larger than that of the envelope signal from an electrode that is not touched, the signal processing unit 404 can determine the presence or absence of a touch for each electrode based on a preset threshold value (touch determination processing illustrated in FIG. 4). For example, the signal processing unit 404 determines, for each electrode, that a period during which the value of the envelope signal C exceeds a predetermined threshold value is a period during which the electrode is touched, and outputs, to the controller 405, a signal (a signal indicating that the electrode is touched) that reaches a high level only during the period during which the electrode is (determined to be) touched.

In the signal processing unit 404, the touch determination processing using envelope detection has been described, but similar touch determination processing can be performed by performing Fourier transform on the obtained signal. When the signal B of the commercial power supply frequency component is continuously cut out for a certain period (frame), and the frame is Fourier transformed, then a spectrum of the piezoelectric signal intensity with respect to the frequency is obtained. In the spectrum, since the intensity at the commercial power supply frequency on the touched electrode is higher than the intensity on the electrode that is not touched, it is possible to determine whether or not each electrode is touched. For example, when the intensity at the commercial power supply frequency on a certain electrode exceeds a predetermined threshold value, it can be determined that the electrode is being touched at the time of measurement.

### LPF Processing

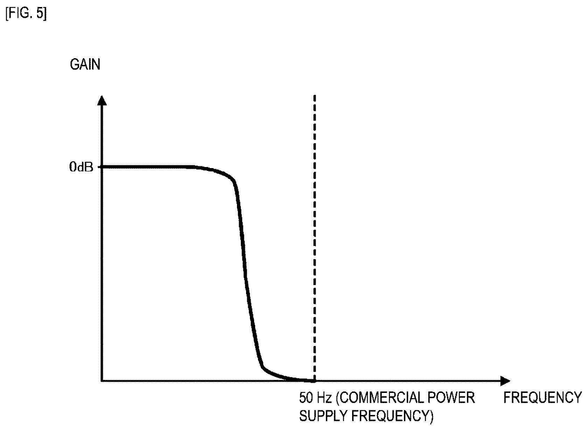

As described above, the frequency component E other than the commercial power supply frequency component includes the piezoelectric signal. The signal processing unit 404 obtains the piezoelectric signal F by performing the LPF processing illustrated in FIG. 4 by using an LPF (for example, a filter having the filter frequency characteristics illustrated in FIG. 5) for extracting only the piezoelectric signal.

### Pressure Measurement Processing

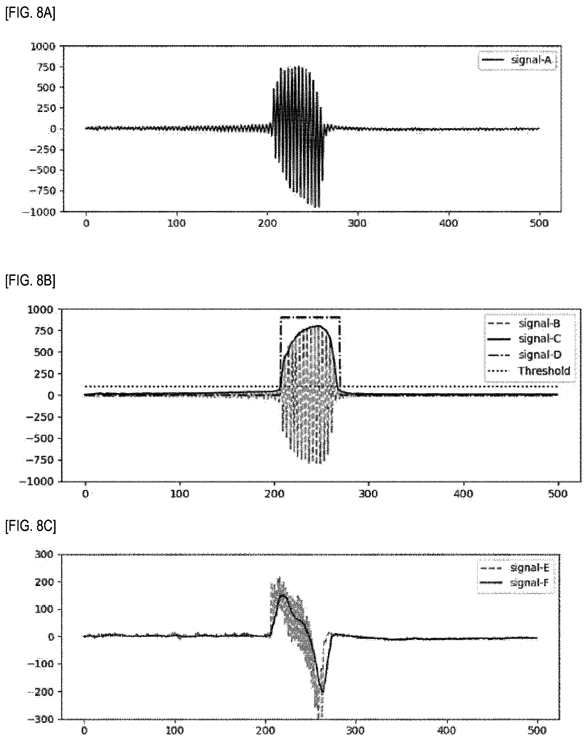

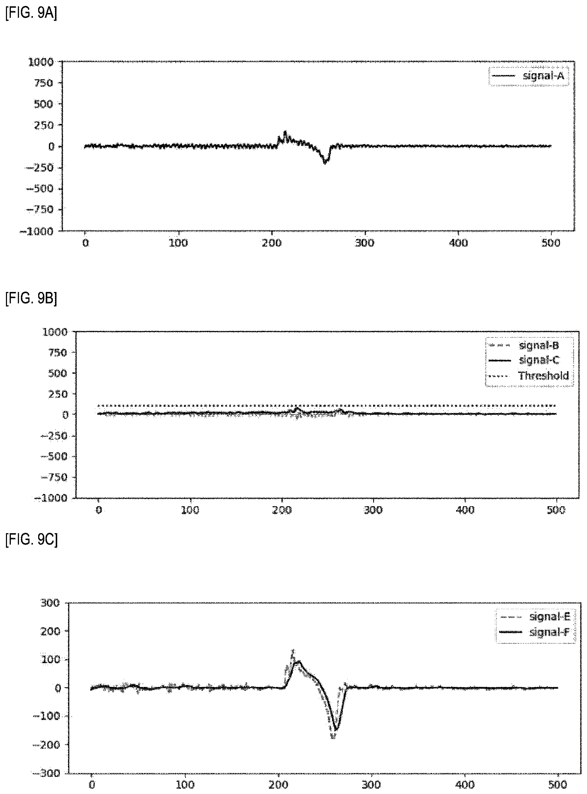

The signal processing unit 404 measures the pressure on each electrode based on the obtained piezoelectric signal F, and outputs a pressure signal indicating the measured pressure (pressing force) to the controller 405. To be specific, the signal processing unit 404 can measure the pressure on each electrode by referring to information (for example, a table or a calculation formula) that is stored in advance in a storage unit (not illustrated) of the display device 1, and that associates the magnitude of the piezoelectric signal (values shown on the vertical axis in FIGS. 8C and 9C to be described later) with the pressing force.

The controller 405 outputs, to the multiplexer 402, a selection signal for causing the AD conversion unit 403 to sequentially output the amplified analog signals from the respective electrodes. The controller 405 outputs, to the signal processing unit 404, a selection signal for executing the above-described signal processing on each digital signal input from the AD conversion unit 403.

The controller 405 detects the touch position and the pressing force in real time based on the signal input from the signal processing unit 404. Specifically, the controller 405 can identify (that is, detect) the touch position based on the electrode corresponding to the signal indicating the touch determination processing result input from the signal processing unit 404, and the electrode position information (for example, position coordinates) stored in advance in the storage unit. Further, the controller 405 can determine (that is, detect) the pressing force on each electrode based on the pressure signal indicating the pressure measurement processing result input from the signal processing unit 404.

According to the above embodiment, since it is not necessary to limit the period for the pressing force detection, the touch position and the pressing force can be detected substantially at the same time. Further, by separating the signal detected from the first detection conductor 203 into the first signal for touch position detection and the second signal for pressing force detection, the touch position and the pressing force can be detected with high sensitivity. Furthermore, by disposing the first detection conductor 203 on the opening side, the touch position can be detected from the first signal with high sensitivity and high accuracy. In addition, since the touch position is detected using a band-cut filter or the like that is necessary for a normal sensor to perform signal processing (that is, without the need for an additional circuit), it is possible to provide an input device and a display device having a simple configuration.

### Modification

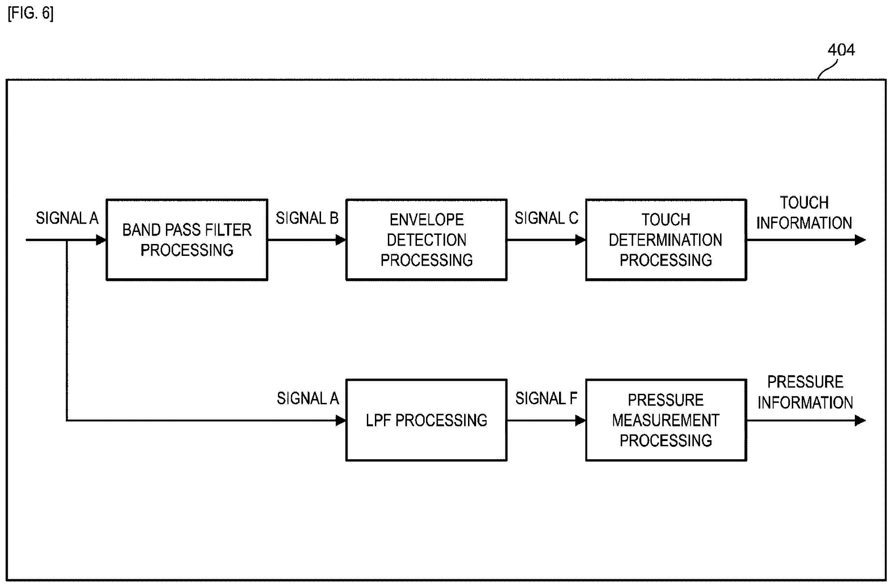

In the above embodiment, a notch filter is used to obtain a signal other than the commercial power supply frequency. However, in order to obtain the same effect in the entire signal processing unit 404, a method of applying an LPF that removes a band including the commercial power supply frequency is also conceivable. This method conducted by the signal processing unit 404 will be described below with reference to FIG. 6. In this method, frequency separation processing is not performed.

### Bandpass Filter Processing

Before the bandpass filter processing (and the LPF processing described below), first, the signal processing unit 404 performs offset adjustment on the digital signal input from the AD conversion unit 403. The signal processing unit 404 uses a commercial power supply frequency band pass filter (band pass filter; for example, a filter having filter frequency characteristics illustrated in FIG. 7) to extract a commercial power supply frequency component B that has passed through the filter from the digital signal A (after the offset adjustment) input from the AD conversion unit 403.

### Envelope Detection Processing

Since the envelope detection processing in this method is the same as or similar to the envelope detection processing described with reference to FIG. 4, the description thereof will be omitted.

### Touch Determination Processing

Since the touch determination processing in this method is the same as or similar to the touch determination processing described with reference to FIG. 4, the description thereof will be omitted.

### LPF Processing

The digital signal A (after the offset adjustment) input from the AD conversion unit 403 includes not only the commercial power supply frequency noise (commercial power supply frequency component), but also the piezoelectric signal. Therefore, the signal processing unit 404 obtains the piezoelectric signal F by performing the LPF processing illustrated in FIG. 6 by using an LPF (for example, a filter having the filter frequency characteristics illustrated in FIG. 5) for removing the commercial power supply frequency and extracting only the piezoelectric signal.

### Pressure Measurement Processing

Since the pressure measurement processing in this method is the same as or similar to the pressure measurement processing described with reference to FIG. 4, the description thereof will be omitted.

In the present modification example, by combining a plurality of filter blocks in this manner, it is possible to obtain the same or similar effects as those of the above embodiment.

### Other Modification

In the above-described embodiment and modifications, signal processing is executed by using a frequency filter such as a notch filter as a digital filter after digital signal conversion. However, the same function can be implemented by using an analog filter instead of the digital filter.

Although the controller 405 has been described as determining the touch position based on the result of the touch determination processing performed by the signal processing unit 404 in the above embodiment and modifications, the signal processing unit 404 may determine the touch position based on the result of the touch determination processing and the position information of the electrode stored in advance in the storage unit.

Although the signal processing unit 404 has been described as measuring the pressure on each electrode based on the obtained piezoelectric signal, and outputting the pressure signal indicating the measured pressure (pressing force) to the controller 405 in the above embodiment and modifications, the controller 405 may measure the pressure on each electrode. In this case, for example, the signal processing unit 404 outputs information indicating the magnitude of the obtained piezoelectric signal to the controller 405, and the controller 405 can measure the pressure on each electrode based on the information indicating the magnitude of the piezoelectric signal input from the signal processing unit 404 by referring to information in which the magnitude of the piezoelectric signal is associated with the pressing force in advance, which is stored in the storage unit in advance.

### Pressing Force Detection and Touch Position Detection Evaluation

The inventor of the present invention manufactured the touch type input device according to the present embodiment, and evaluated the pressing force detection and the touch position detection. In the present touch input device, the first detection conductor 203 was made up of 12 rectangular electrodes (electrode E₍₁₎ to electrode E₍₁₂₎) disposed so as to be insulated from each other, and the total light transmittance of the touch sensor 20 was 80% or more. Where the analog signal AS₍₁₎ to the analog signal AS₍₁₂₎ from the electrode E₍₁₎ to the electrode E₍₁₂₎ were output in one cycle, the signals output from the multiplexer 402 at the sampling frequencies 200 Hz were converted from the analog signals AS₍₁₎ to AS₍₁₂₎ to the digital signals DS₍₁₎ to DS₍₁₂₎ by the AD conversion unit 403, and the digital signals DS₍₁₎ to DS₍₁₂₎ after the AD conversion were input to the signal processing unit 404.

FIGS. 8A to 8C are diagrams illustrating examples of digital signals after the signal processing unit 404 processes the signals detected from the electrode touched by the finger.

FIG. 8A illustrates the digital signal A ("signal-A") after offset adjustment by the signal processing unit 404, which is obtained via the rectangular electrode touched by the finger. In the graph illustrated in FIG. 8A, the horizontal axis represents the number of times of sampling n when sampling is performed at a cycle of 5 milliseconds, and the vertical axis represents the voltage signal intensity (intensity 1 is equivalent to 0.8 millivolts). FIG. 8A illustrates a signal (humming noise) dependent on the commercial power supply frequency (50 Hz), and the piezoelectric signal that are superimposed.

FIG. 8B illustrates an example of signal processing in which the commercial power supply frequency component B ("signal-B") is obtained by subtracting the frequency component E (illustrated in FIG. 8C) other than the commercial power supply frequency component that has passed through a notch filter (band-cut filter) of the commercial power supply frequency (50 Hz) from the digital signal A, and envelope detection processing is performed on the commercial power supply frequency component B to obtain an envelope signal C ("signal-C"). Since the value of the envelope signal C of the rectangular electrode touched by the finger is larger than the value of the envelope signal of the rectangular electrode not touched by the finger (see FIG. 9B to be described later), the signal processing unit 404 can determine the presence or absence of a touch for each rectangular electrode by performing threshold-based determination on the value of the envelope signal C. In this evaluation, the signal processing unit 404 determined that a period during which the value of the envelope signal C exceeds a threshold value 100 ("Threshold") is a period during which the electrode is touched, and output a signal D ("signal-D") that outputs a high level only during the period during which the electrode is touched.

On the other hand, the signal E other than the commercial power supply frequency component included a piezoelectric signal, and the signal processing unit 404 obtained a piezoelectric signal F by performing LPF processing using an LPF for extracting only the piezoelectric signal, and measured the pressure on each electrode based on the piezoelectric signal F.

FIG. 8C illustrates a frequency component E ("signal-E") other than the commercial power supply frequency that has passed through the notch filter, and a signal F ("signal-F") obtained by performing moving average processing on the frequency component E. Although the commercial power supply frequency is not included in the frequency component E, high frequency noise is superimposed on the frequency component E; however, the signal F does not include high frequency noise. The signal processing unit 404 outputs a signal F that indicates a positive value when the finger presses the electrode, while indicating a negative value when the finger is released from the electrode, and has a magnitude proportional to the pressure (pressing force).

FIGS. 9A to 9C are diagrams illustrating examples of digital signals after the signal processing unit 404 performs the signal processing on the signals detected from the electrode that is not touched by the finger and adjacent to the electrode touched by the finger.

FIG. 9A is a diagram illustrating the digital signal A ("signal-A") after offset adjustment by the signal processing unit 404. The digital signal A is obtained by sampling, at the frequency of 200 Hz, the analog signal from a rectangular electrode that is not touched by the finger and adjacent to the rectangular electrode touched by the finger. In FIG. 9A, almost no signal of the commercial power supply frequency was detected.

FIG. 9B illustrates an example of signal processing in which the commercial power supply frequency component B ("signal-B") is obtained by subtracting the frequency component E (illustrated in FIG. 9C) other than the commercial power supply frequency component that has passed through a notch filter (band-cut filter) of the commercial power supply frequency (50 Hz) from the digital signal A, and envelope detection processing is performed on the commercial power supply frequency component B to obtain an envelope signal C ("signal-C"). In FIG. 9B, since there is no period during which the value of the envelope signal C exceeds 100 ("Threshold"), the signal processing unit 404 determines that the finger is not touching an electrode during this measuring period.

FIG. 9C illustrates the frequency component E ("signal-E") other than the commercial power supply frequency that has passed through the notch filter, and a signal F ("signal-F") obtained by performing moving average processing on the frequency component E. In FIG. 9C, the waveform is similar to the waveform illustrated in FIG. 8C, but is detected as a waveform with small amplitudes.

In this manner, the signal processing unit 404 periodically acquires the information of the rectangular electrode touched by the finger and the rectangular electrode not touched by the finger, and outputs the information to the controller 405, so that the controller 405 can identify (that is, detect) the touch position by referring to the position information of the rectangular electrodes stored in advance in the storage unit. At the same time, the signal processing unit 404 performs the pressure measurement for each electrode based on the signal F, and outputs the measurement result to the controller 405, so that the controller 405 can also determine (that is, detect) the pressure (pressing force) which is the measurement result.

The controller 405 can detect the touch position and the pressing force in real time based on these two pieces of information input from the signal processing unit 404.

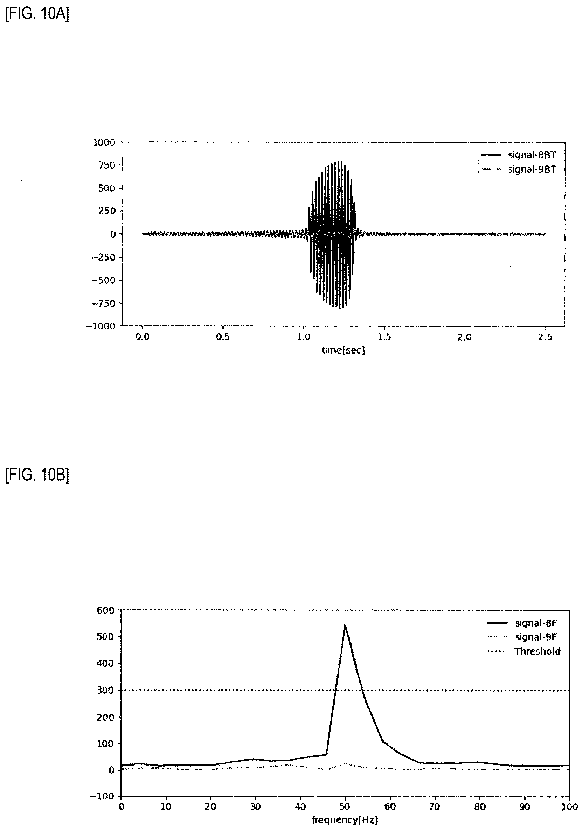

FIG. 10A is a diagram illustrating the signal-B in each of FIG. 8B and FIG. 9B with respect to time (unit: second) on the horizontal axis. The signal of the touched electrode is referred to as a signal-8BT, and the signal of the electrode that is not touched is referred to as a signal-9BT.

FIG. 10B is a diagram illustrating a signal obtained by performing fast Fourier transform (FFT) on a section from 1.00 second to 1.25 seconds in FIG. 10A, and the horizontal axis corresponds to a frequency (unit: Hz). The signal obtained by performing FET on the signal-8BT is denoted as a signal-8F, and the signal obtained by performing FET on the signal-9BT is a denoted as signal-9F. The sampling width for Fourier transform is not particularly limited. As the sampling width decreases, the detection speed increases, although the number of detection points decreases. Consequently, the detection accuracy tends to decrease.

In the signal-8F from the touched electrode, a strong signal derived from a pressing force is observed in a commercial power supply frequency band (50 Hz). On the other hand, in the signal-9F from the electrode that is not touched, the signal is not observed in the commercial power supply frequency band. Therefore, it can be understood that the presence or absence of a touch on the electrode can be determined by appropriately setting the threshold for the intensities (set to 300 in FIG. 10B).

### Second Embodiment

Next, a second embodiment of the present invention will be described. The second embodiment is different from the first embodiment in the configuration/operation of the first detection conductor and the circuit. Therefore, the following description will focus mainly on the configurations/operations of the first detection conductor and the circuit that are different from the first embodiment, and descriptions of the same configurations as or similar configurations to the first embodiment may be omitted.

As illustrated in FIGS. 1 and 2, the display device 1 according to the present embodiment also includes the housing 10 having a substantially rectangular parallelepiped shape, and the touch sensor 20, the display panel 30, and the various circuits 40 are disposed in the housing 10. The touch sensor 20 includes the protective film (protective layer) 201, the base material 202, the first detection conductor 203, the piezoelectric film 204, and the second detection conductor 205.

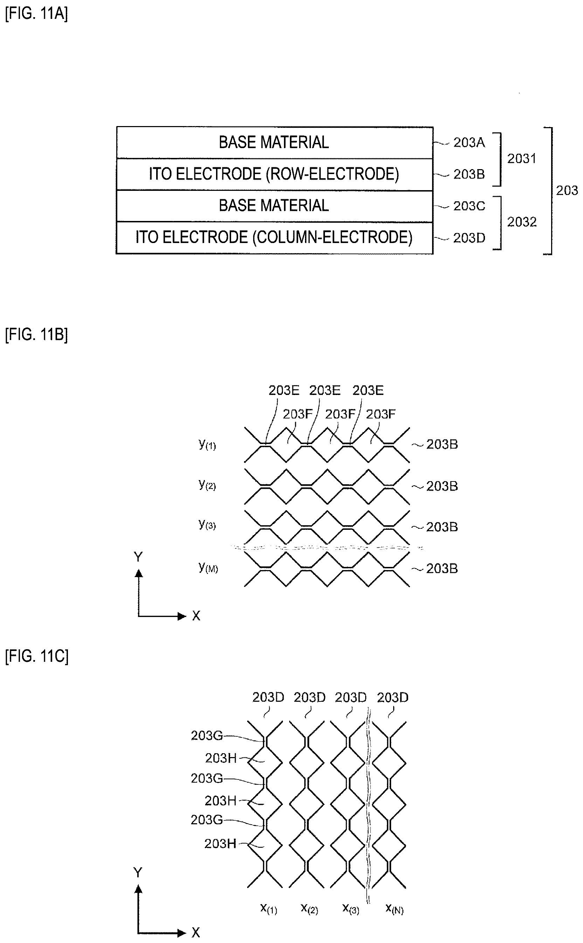

Hereinafter, the first detection conductor 203 will be described with reference to FIGS. 11A to 11D.

FIG. 11A is a diagram illustrating a configuration example of first detection conductor. As illustrated in FIG. 11A, the first detection conductor 203 includes a first portion 2031 including a PET film as a base material 203A and an electrode 203B (also referred to as an ITO electrode or row-electrodes 203B) containing ITO as a main component, and a second portion 2032 including a PET film as a base material 203C and an electrode 203D (also referred to as an ITO electrode or column-electrodes 203D) containing ITO as a main component. The row-electrodes 203B and the column-electrodes 203D are electrically insulated from each other.

In the present embodiment, the row-electrode 203B is formed in a desired pattern on one surface of the base material 203A, and the column-electrode 203D is formed in a desired pattern on one surface of the base material 203C by photolithography.

FIG. 11B illustrates the row-electrodes as viewed in the Z direction. As illustrated in FIG. 11B, the row-electrodes 203B included in the first portion 2031 are linearly arrayed in parallel to the X-axis at positions y₍₁₎, y₍₂₎, y₍₃₎, ..., y_{(M)} on the Y-axis when viewed from the Z-direction. Here, the intervals between y₍ₘ₎ and y_{(m,1)} are substantially the same (m = 1, 2, ..., M-1). Each of the row-electrodes 203B included in the first portion 2031 has a plurality of linear portions 203E extending linearly, and a plurality of non-linear portions 203F protruding from the linear portions 203E. As illustrated in FIG. 11B, the linear portion 203E extends linearly in parallel to the X-axis when viewed from the Z-direction. The non-linear portion 203F is a portion protruding from the linear portion 203E in the Y direction when viewed from the Z direction. In an example, as illustrated in FIG. 11B, the non-linear portion 203F has a substantially square outer contour when viewed from the Z direction. Note that the non-linear portion 203F may have a substantially rhombic outer contour depending on the setting of the inter-electrode distance between the row-electrodes 203B.

FIG. 11C illustrates the column-electrodes as viewed in the Z-direction. As illustrated in FIG. 11C, the column-electrodes 203D included in the second portion 2032 are linearly arrayed in parallel to the Y-axis at positions x₍₁₎, x₍₂₎, x₍₃₎, ..., x_{(N)} on the X-axis when viewed from the Z-direction. Here, the intervals between x₍ₙ₎ and x₍ₙ₊₁₎ are substantially the same (n = 1, 2, ..., N-1). Each of the column-electrodes 203D included in the second portion 2032 includes a plurality of linear portions 203G extending linearly, and a plurality of non-linear portions 203H protruding from the linear portions 203G. As illustrated in FIG. 11C, the linear portion 203G linearly extends parallel to the Y-axis when viewed from the Z-direction. The non-linear portion 203H is a portion protruding from the linear portion 203G in the X direction when viewed from the Z direction. In one example, as illustrated in FIG. 11C, the non-linear portion 203H has a substantially square outer contour when viewed from the Z direction. Note that the non-linear portion 203H may have a substantially rhombic outer contour depending on the setting of the inter-electrode distance between the column-electrodes 203D.

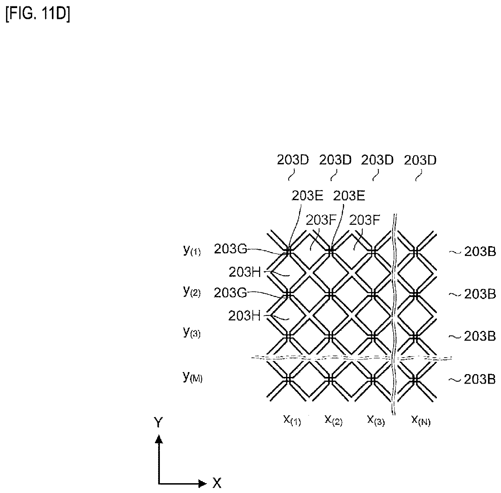

FIG. 11D illustrates the row-electrodes and column-electrodes when viewed from the Z-direction. As illustrated in FIG. 11D, the row-electrodes 203B included in the first portion 2031 and the column-electrodes 203D included in the second portion 2032 are orthogonal to each other when viewed from the Z-direction. When viewed from the Z direction, the row-electrodes 203B and the column-electrodes 203D intersect, and the intersection angle, the interval between the row-electrodes 203B, and the interval between the column-electrodes 203D are not particularly limited. For example, the intersection angle between the row-electrode 203B and the column-electrode 203D may be 30 degrees or 45 degrees. Depending on the angle at which the row-electrode 203B and the column-electrode 203D intersect, the non-linear portions 203F and 203H may have a substantially parallelogram-shaped outer contour.

As illustrated in FIG. 11D, each of the row-electrodes 203B included in the first portion 2031 and the column-electrodes 203D included in the second portion 2032 intersect when viewed from the Z-direction. As illustrated in FIG. 11D, the non-linear portion 203F of the row-electrode 203B included in the first portion 2031 is disposed in the row-electrode 203B between intersections of the two adjacent non-linear portions 203H when viewed from the Z direction.

Similarly, each of the column-electrodes 203D included in the second portion 2032 and the row-electrodes 203B included in the first portion 2031 intersect each other when viewed from the Z direction. The non-linear portion 203H of the column-electrode 203D included in the second portion 2032 is disposed between intersections of the column-electrode 203D and two adjacent non-linear portions 203F when viewed from the Z direction.

Furthermore, the non-linear portion 203F of the row-electrode 203B included in the first portion 2031, and the non-linear portion 203H of the column-electrode 203D included in the second portion 2032 are disposed so as not to overlap each other when viewed from the Z direction. That is, the row-electrodes 203B included in the first portion 2031, and the column-electrodes 203D included in the second portion 2032 intersect only at the respective linear portions 203E and 203G when viewed from the Z direction.

When the finger of an operator of the display device 1 touches the operation surface, the finger contacts one or more electrodes in the rows and columns of the first detection conductor 203, so that the row and column position coordinates (X, Y) corresponding to the contacted electrode can be identified.

Note that the row-electrodes 203B and the column-electrodes 203D (i.e., the first portion 2031 and the second portion 2032) may be vertically interchanged. In other words, in the Z direction, the column-electrodes 203D (the second portion 2032) may be disposed on the positive side, and the row-electrodes 203B (the first portion 2031) may be disposed on the negative side.

The touch sensor 20 (located on the positive side in the Z-axis direction relative to the display panel 30) formed by stacking the protective film 201, the base material 202, the first detection conductor 203, the piezoelectric film 204, and the second detection conductor 205 can have a total light transmittance of 80% or more.

As described above, the touch sensor 20 has a structure in which the piezoelectric film 204 is sandwiched between the first detection conductor 203 disposed on the open surface side of the housing 10 from the piezoelectric film 204 and the second detection conductor 205 disposed on the side opposite to the open surface of the housing 10 from the piezoelectric film 204.

Here, when the operation surface is pressed by the finger of an operator of the display device 1, the flat plate surface of the piezoelectric film 204 is curved, and charges corresponding to the pressing force are generated as described above. There is a potential difference caused by the generated charges between the first detection conductor 203 and the second detection conductor 205. A signal from the electrode (the row-electrode and the column-electrode) constituting the first detection conductor 203 includes a piezoelectric signal due to this potential difference. Therefore, by extracting the piezoelectric signal from the signal from the electrode, the extracted piezoelectric signal can be acquired as a detection signal for pressing force detection. Here, the signal (variation) due to the pressing force applied to the piezoelectric film 204 is generally less than 10 Hz (low frequency).

On the other hand, when the finger of the operator of the display device 1 touches the operation surface, a signal from the electrode constituting the first detection conductor 203 and corresponding to the touch position includes commercial power supply frequency noise caused by the proximity of the finger to the electrode. Therefore, by determining the commercial power supply frequency, the position of the electrode that is the source of the noise (signal) can be detected as the touch position.

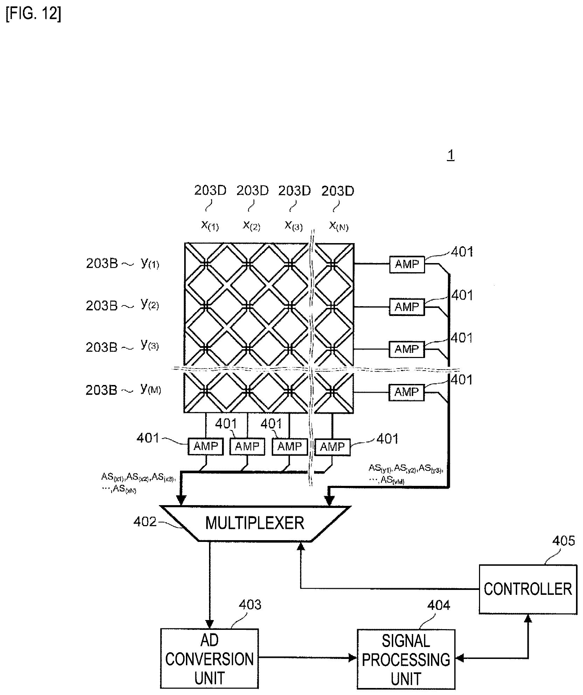

FIG. 12 is an explanatory diagram for explaining the configuration of the display device according to the present embodiment.

As described above, the first portion 2031 of the first detection conductor 203 includes a plurality of (M) row-electrodes, and the second portion 2032 of the first detection conductor 203 includes a plurality of (N) column-electrodes.

Each of the M row-electrodes 203B outputs (transmits) an analog signal to the amplification unit 401. Each of the N column-electrodes 203D outputs (transmits) an analog signal to the amplification unit 401. The number of amplification units 401 is equal to the sum of the number of row-electrodes 203B and the number of column-electrodes 203D (i.e., M + N).

The amplification unit 401 amplifies the analog signal input (received) from each of the M row-electrodes 203B and the N column-electrodes 203D to a range of amplitude that can be measured (0 to 3.3 V in the present embodiment), and outputs the amplified analog signal to the multiplexer 402.

The multiplexer 402 multiplexes the analog signals input from the M row-electrodes 203B via the amplification units 401, and multiplexes the analog signals input from the N column-electrodes 203D via the amplification units 401. The multiplexer 402 sequentially outputs the amplified analog signals AS_{(y1)}, AS_{(y2)}, AS_{(y3)}, ..., AS_{(yM)} from the respective row-electrodes 203B at the positions of y₍₁₎, y₍₂₎, y₍₃₎, ..., y_{(M)} to the AD conversion unit 403, and sequentially outputs the amplified analog signals AS₍ₓ₁₎, AS₍ₓ₂₎, AS₍ₓ₃₎, ..., AS_{(xN)} from the respective column-electrodes 203D at the positions of x₍₁₎, x₍₂₎, x₍₃₎, ..., x_{(N)} to the AD conversion unit 403, at a constant interval (cycle) (that is, periodically and repeatedly), according to the selection signal input from the controller 405. The multiplexer 402 may multiplex together the analog signals input from the M row-electrodes 203B and the N column-electrodes 203D via the amplification units 401.

The AD conversion unit 403 converts the (amplified) analog signals AS_{(y1)} to AS_{(yM)} input from the multiplexer 402 into digital signals DS_{(y1)} to DS_{(yM)}, respectively, and sequentially outputs the digital signals DS_{(y1)} to DS_{(yM)} to the signal processing unit 404, and converts the (amplified) analog signals AS₍ₓ₁₎ to AS_{(xN)} input from the multiplexer 402 into digital signals DS₍ₓ₁₎ to DS_{(xN)}, respectively, and sequentially outputs the digital signals DS₍ₓ₁₎ to DS_{(xN)} to the signal processing unit 404. Here, the output of the digital signals from the AD conversion unit 403 to the signal processing unit 404 is continuously and periodically repeated at a constant cycle (for example, 5 milliseconds), where the digital signal DS_{(y1)} to the digital signal DS_{(xN)} are output in one cycle. The sampling frequency at the time of AD conversion is at least twice the commercial power supply frequency.

The signal processing unit 404 performs frequency separation processing, envelope detection processing, touch determination processing, low-pass filter (LPF) processing, and pressure measurement processing on the digital signal input from the AD conversion unit 403 at a constant interval (cycle) (that is, periodically and repeatedly) according to the selection signal input from the controller 405.

### Touch Determination Processing

Since a value of the envelope signal C from the touched electrode is larger than that of the envelope signal from an electrode that is not touched, the signal processing unit 404 can determine the presence or absence of a touch for each region of the electrode corresponding to the position coordinates (X, Y) on the basis of a preset threshold value (touch determination processing illustrated in FIG. 4). For example, the signal processing unit 404 determines, for each region of the electrode corresponding to the position coordinates (X, Y), that a period during which the value of the envelope signal C exceeds a predetermined threshold value is a period during which the region is touched, and outputs, to the controller 405, a signal (a signal indicating that the region is touched) that reaches a high level only during the period during which the region is (determined to be) touched.

### Pressure Measurement Processing

The signal processing unit 404 measures the pressure on each region of the electrode corresponding to the position coordinates (X, Y) based on the obtained piezoelectric signal F, and outputs a pressure signal indicating the measured pressure (pressing force) to the controller 405. Specifically, the signal processing unit 404 can measure the pressure on each region of the electrode corresponding to the position coordinates (X, Y) by referring to information (for example, a table or a calculation formula) in which the magnitude of the piezoelectric signal is associated with the pressing force, which is stored in advance in a storage unit (not illustrated) of the display device 1.

The controller 405 outputs, to the multiplexer 402, a selection signal for causing the AD conversion unit 403 to sequentially output the amplified analog signals from the respective electrodes. The controller 405 outputs, to the signal processing unit 404, a selection signal for executing the above-described signal processing on each digital signal input from the AD conversion unit 403.

The controller 405 detects the touch position and the pressing force in real time based on the signal input from the signal processing unit 404.

The controller 405 can identify (that is, detect) the touch position based on the signal indicating the touch determination processing result input from the signal processing unit 404, and the position information (for example, position coordinates (X, Y)) stored in advance in the storage unit. For example, when the value of the envelope signal C exceeds a threshold value, the controller 405 may detect, as the touch position, a position of a region corresponding to the envelope signal C within the region covered by the plurality of row-electrodes 203B and the plurality of column-electrodes 203D.

In addition, the controller 405 can determine (that is, detect) the pressing force for each region of the electrode corresponding to the position coordinates (X, Y) based on the pressure signal indicating the pressure measurement processing result input from the signal processing unit 404.

According to the present embodiment, since it is not necessary to limit the period for the pressing force detection, the touch position and the pressing force can be detected substantially at the same time. Further, by separating the signal detected from the first detection conductor 203 into the first signal for touch position detection and the second signal for pressing force detection, the touch position and the pressing force can be detected with high sensitivity. Furthermore, by disposing the first detection conductor 203 on the opening side, the touch position can be detected from the first signal with high sensitivity and high accuracy. In addition, since the touch position is detected using a band-cut filter or the like that is necessary for a normal sensor to perform signal processing (that is, without the need for an additional circuit), it is possible to provide an input device and a display device having a simple configuration.

In addition, according to the present embodiment, it is possible to determine a touch position in a wiring region smaller than a wiring region that is necessary in a case where rectangular divided electrodes are disposed in a matrix on the same plane to determine a touch position, Therefore, it is possible to reduce the possibility of an incorrect determination and determine a touch position with higher accuracy. This will be described below.

When signals are extracted from rectangular divided electrodes disposed in a matrix on the same plane, signal lines extending from the divided electrodes cross the effective area of the touch panel. Therefore, an operator may touch this wiring portion. In this case, even if the contacted area is small, the humming noise is propagated to the amplification unit via the wiring portions, and it is incorrectly determined that a plurality of rectangular electrodes are touched. When the number of electrodes is increased in order to detect the touch position with higher resolution, the area of the wiring portions is proportionally increased, and accordingly the frequency of incorrect determination is further increased.

On the other hand, in the electrode pattern according to the present embodiment, a signal line is drawn out in such a manner as to penetrate the center of the electrode. Thus, even if the finger contacts the electrode on the signal line, a signal in which the humming noise is propagated is detected on the same row or column as the touch position. Therefore, there is no deviation in coordinates on the X-axis and the Y-axis at which humming noise is detected, and it is possible to eliminate or reduce an incorrect determination caused by disposing the rectangular divided electrodes in a matrix on the same plane.

### Modification

Although the controller 405 has been described as determining the touch position based on the result of the touch determination processing performed by the signal processing unit 404 in the above embodiment and modifications, the signal processing unit 404 may determine the touch position based on the result of the touch determination processing and the position information stored in advance in the storage unit.

In the above embodiment and modification examples, the signal processing unit 404 has been described as measuring the pressure based on the obtained piezoelectric signal, and outputting the pressure signal indicating the measured pressure (pressing force) to the controller 405, but the controller 405 may measure the pressure. In this case, for example, the signal processing unit 404 outputs information indicating the magnitude of the obtained piezoelectric signal to the controller 405, and the controller 405 can measure the pressure based on the information indicating the magnitude of the piezoelectric signal input from the signal processing unit 404 by referring to information in which the magnitude of the piezoelectric signal is associated with the pressing force in advance, which is stored in the storage unit in advance. For example, when the value of the envelope signal C exceeds a threshold value, the controller 405 may detect a pressing force on a region corresponding to the envelope signal within the region covered by the plurality of row-electrodes 203B and the plurality of column-electrodes 203D, based on information associating the magnitude of the piezoelectric signal with the pressing force.

### Third Embodiment

Next, a third embodiment of the present invention will be described. The third embodiment is different from the second embodiment in the configuration of the first detection conductor. Therefore, the following description will focus mainly on the configuration of the first detection conductor different from the second embodiment, and the description of the same configuration as or similar configuration to the second embodiment may be omitted.

As described above, as illustrated in FIGS. 1 and 2, the display device 1 according to the present embodiment also includes the housing 10 having a substantially rectangular parallelepiped shape, and the touch sensor 20, the display panel 30, and the various circuits 40 are disposed in the housing 10. The touch sensor 20 includes the protective film (protective layer) 201, the base material 202, the first detection conductor 203, the piezoelectric film 204, and the second detection conductor 205.

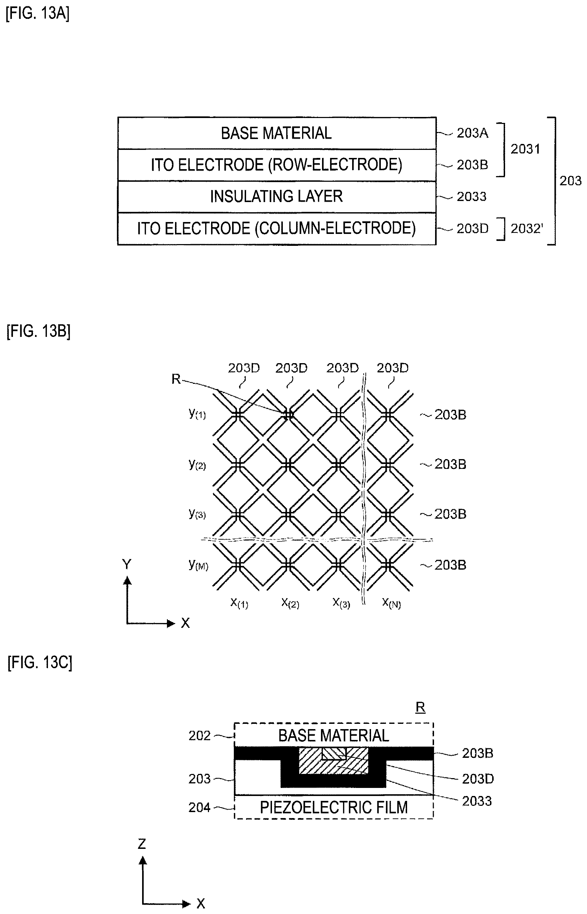

Next, the first detection conductor 203 according to the present embodiment will be described with reference to FIGS. 13A to 13C.

FIG. 13A is a diagram illustrating a configuration example of first detection conductor. As illustrated in FIG. 13A, the first detection conductor 203 includes the first portion 2031 including a PET film as a base material 203A, and the electrode (ITO electrode or row-electrodes) 203B containing ITO as a main component, an insulating layer 2033, and a second portion 2032' including the electrode (ITO electrode or column-electrodes) 203D containing ITO as a main component. The row-electrodes 203B and the column-electrodes 203D are electrically insulated from each other.

Unlike the second embodiment, in the third embodiment, only one base material 203A is provided as the base material for the first detection conductor, and the column-electrodes 203D are stacked on the row-electrodes 203B by photolithographic etching.

FIG. 13B is a diagram illustrating the row-electrodes and the column-electrodes when viewed from the Z direction. FIG. 13C is a side cross-sectional view of the first detection conductor 203 in the intersection regions where the row-electrodes and the column-electrodes illustrated in FIG. 13B intersect. As illustrated in FIGS. 13B and 13C, the insulating layer 2033 is provided between the row-electrode 203B and the column-electrode 203D in intersection region R.

Next, a manufacturing process of a part (the first detection conductor 203 and the protective film 201) of the touch sensor 20 according to the third embodiment will be described.

First, a film of ITO (the row-electrodes 203B and the column-electrodes 203D) is formed and patterned by photolithographic etching. Here, the non-linear portions 203F are connected by the linear portions 203E in the X direction, while the non-linear portions 203H are not connected in the Y direction.

Next, an insulating layer 2033 is formed and patterned by photolithographic etching. Thus, the X-direction connecting portion (the linear portions 203E) is insulated.

Next, a metal electrode film is formed and patterned by photolithographic etching. As a result, the wiring electrodes (linear portions 203G) connecting in the Y direction are formed.

Next, a protective film 201 is formed.

As described above, in the third embodiment, the layered structure of the touch sensor 20 is thinner than that of the second embodiment, and the column-electrodes 203D are closer to the protective film 201.

According to the present embodiment, in addition to the effect of the second embodiment, the touch position and the pressing force can be detected with higher sensitivity.

### Modification

The modifications described above in regard to the second embodiment can also be applied to the present embodiment.

### Fourth Embodiment

Next, a fourth embodiment of the present invention will be described. The fourth embodiment is different from the second embodiment in the configuration of the first detection conductor. Therefore, the following description will focus mainly on the configuration of the first detection conductor different from the second embodiment, and the description of the same configuration as or similar configuration to the second embodiment may be omitted.

As described above, as illustrated in FIGS. 1 and 2, the display device 1 according to the present embodiment also includes the housing 10 having a substantially rectangular parallelepiped shape, and the touch sensor 20, the display panel 30, and the various circuits 40 are disposed in the housing 10. The touch sensor 20 includes the protective film (protective layer) 201, the base material 202, the first detection conductor 203, the piezoelectric film 204, and the second detection conductor 205.

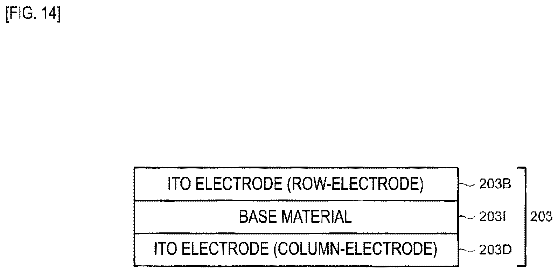

Next, the first detection conductor 203 according to the present embodiment will be described with reference to FIG. 14.

FIG. 14 is a diagram illustrating a configuration example of the first detection conductor. As illustrated in FIG. 14, the first detection conductor 203 includes a PET film as a base material 203I, the electrode (ITO electrode or row-electrodes) 203B containing ITO as a main component, and the electrode (ITO electrode or column-electrodes) 203D containing ITO as a main component. These electrodes 203B and 203D are respectively formed on both surfaces of the base material 203I. The row-electrodes 203B and the column-electrodes 203D are electrically insulated from each other.

Unlike the second embodiment, in the fourth embodiment, only one base material 203I is provided as a base material for the first detection conductor, and the row-electrodes 203B and the column-electrodes 203D are formed respectively in their desired patterns on both surfaces of the base material 203I by photolithography.

To be more specific, in this example, far ultraviolet rays that do not pass through the base material 203I are employed as light for exposing the resist films formed on both sides of the base material 203I, and a film having a function of blocking far ultraviolet rays is used as the base material 203I. As a result, the two resist films can be simultaneously exposed in different patterns, and electrodes having different patterns can be formed on both surfaces of one base material 203I.

As described above, in the fourth embodiment, the layered structure of the touch sensor 20 is thinner than that of the second embodiment, and the column-electrodes 203D are closer to the protective film 201.

According to the present embodiment, in addition to the effect of the second embodiment, the touch position and the pressing force can be detected with higher sensitivity. In addition, since the electrodes are formed on both surfaces of one base material 203I, the positional accuracy can be improved, and the complexity of man-hours can be reduced.

### Modification

The modifications described above in regard to the second embodiment can also be applied to the present embodiment.

### Effects of Embodiment

The input device included in the display device 1 according to an embodiment of the present invention includes the touch sensor 20, the signal processing unit 404, and the controller 405. The touch sensor 20 includes the piezoelectric film 204, the first detection conductor 203 facing the piezoelectric film 204, disposed on a side to be touched by a finger, and made up of divided electrodes having a plurality of electrode portions electrically insulated from each other, and the second detection conductor 205 facing the first detection conductor 203, and disposed on a side opposite to the first detection conductor 203 with respect to the piezoelectric film 204. The signal processing unit 404 and the controller 405 separate a signal detected from the first detection conductor 203 using the second detection conductor 205 as a reference potential into a first signal (humming noise) in a commercial power supply frequency band and a second signal in a frequency band other than the commercial power supply frequency band. The signal processing unit 404 and the controller 405 detect a touch position on the touch sensor 20 using the first signal, and detect the pressing force on the touch sensor 20 using the second signal.

With the configuration described above, since it is not necessary to limit the period for the pressing force detection, the touch position and the pressing force can be detected substantially at the same time, and the touch position and the pressing force can be detected with high sensitivity by separating the signal detected from the first detection conductor 203 into the first signal and the second signal. Further, by disposing the first detection conductor 203 on the opening side, the touch position can be detected from the first signal with high sensitivity and high accuracy.

In addition, since the touch position is detected using a band-cut filter or the like that is necessary for a normal sensor to perform signal processing (that is, without the need for an additional circuit), it is possible to provide an input device having a simple configuration.

The input device included in the display device 1 according to an embodiment of the present invention includes the touch sensor 20, the signal processing unit 404, and the controller 405. The touch sensor 20 includes the piezoelectric film 204, and the first detection conductor 203 facing the piezoelectric film 204, and including a plurality of row-electrodes 203B disposed linearly along the X-axis and a plurality of column-electrodes 203D disposed linearly along the Y-axis. The plurality of row-electrodes 203B and the plurality of column-electrodes 203D are electrically insulated from each other. The touch sensor 20 further includes the second detection conductor 205 facing the first detection conductor 203, and disposed on a side opposite to the first detection conductor 203 with respect to the piezoelectric film 204. The signal processing unit 404 and the controller 405 separate a signal detected from the first detection conductor 203 using the second detection conductor 205 as a reference potential into a first signal (humming noise) in a commercial power supply frequency band and a second signal in a frequency band other than the commercial power supply frequency band. The signal processing unit 404 and the controller 405 detect a touch position on the touch sensor 20 using the first signal, and detect the pressing force on the touch sensor 20 using the second signal.

With the configuration described above, since it is not necessary to limit the period for the pressing force detection, the touch position and the pressing force can be detected substantially at the same time, and the touch position and the pressing force can be detected with high sensitivity by separating the signal detected from the first detection conductor 203 into the first signal and the second signal. Further, by disposing the first detection conductor 203 on the opening side, the touch position can be detected from the first signal with high sensitivity and high accuracy.

In addition, since the touch position is detected using a band-cut filter or the like that is necessary for a normal sensor to perform signal processing (that is, without the need for an additional circuit), it is possible to provide an input device having a simple configuration.

In addition, it is possible to determine the touch position in a wiring region smaller than a wiring region that is necessary in a case where the rectangular divided electrodes are disposed in a matrix on the same plane to determine the touch position. Therefore, it is possible to reduce the possibility of an incorrect determination and to determine the touch position with higher accuracy.

### Summary of Embodiment

An input device according to an aspect of the present invention includes a touch sensor and a control unit, in which the touch sensor includes: a piezoelectric film; a first detection conductor facing the piezoelectric film, and made up of divided electrodes having a plurality of electrodes electrically insulated from each other; and a second detection conductor facing the first detection conductor, and disposed on a side opposite to the first detection conductor with respect to the piezoelectric film, and the control unit is configured to: separate a signal detected from the first detection conductor with the second detection conductor used as a reference potential into a first signal in a commercial power supply frequency band and a second signal in a frequency band other than the commercial power supply frequency band; and detect a touch position using the first signal, and detect a pressing force using the second signal.

In one example, the control unit is configured to calculate an envelope signal of the first signal, and when a value of the envelope signal exceeds a threshold value, detect a position of a corresponding one of the divided electrodes to the envelope signal as the touch position.

In one example, the control unit is configured to detect a pressing force on each of the divided electrodes based on information in which a value of the second signal is associated with the pressing force.

In one example, the first detection conductor is disposed closer to a surface of the touch sensor than the second detection conductor, the surface being touched by a finger.

In one example, the control unit is configured to separate the signal into the first signal and the second signal using a band pass filter configured to pass the commercial power supply frequency band.

In one example, the control unit is configured to separate the signal into the first signal and the second signal using a band stop filter configured to pass a frequency band other than the commercial power supply frequency band.

In one example, the piezoelectric film is made of a fluorine-based resin.

In one example, a total light transmittance of the touch sensor is 80% or more.

A display device according to an aspect of the present invention includes: the input device; a display panel overlapping a surface of the touch sensor opposite to a surface to be touched by a finger, and configured to display an image; and a drive unit configured to drive the display panel.

In addition, an input device according to an aspect of the present invention includes a touch sensor and a control unit, in which the touch sensor includes: a piezoelectric film; a first detection conductor facing the piezoelectric film, and including a plurality of first electrodes linearly disposed along a first straight line and a plurality of second electrodes linearly disposed along a second straight line, the plurality of first electrodes and the plurality of second electrodes being electrically insulated from each other; and a second detection conductor facing the first detection conductor, and disposed on a side opposite to the first detection conductor with respect to the piezoelectric film, and the control unit is configured to: separate a signal detected from the first detection conductor with the second detection conductor used as a reference potential into a first signal in a commercial power supply frequency band and a second signal in a frequency band other than the commercial power supply frequency band; and detect a touch position using the first signal, and detect a pressing force using the second signal.

In one example, the control unit is configured to calculate an envelope signal of the first signal, and when a value of the envelope signal exceeds a threshold value, detect, as the touch position, a position of a region corresponding to the envelope signal within a region covered by the plurality of first electrodes and the plurality of second electrodes.

In one example, the control unit is configured to detect a pressing force on a region corresponding to the envelope signal within the region covered by the plurality of first electrodes and the plurality of second electrodes, based on information in which a value of the second signal is associated with the pressing force.

In one example, the first detection conductor is disposed closer to a surface of the touch sensor than the second detection conductor, the surface being touched by a finger.

In one example, the control unit is configured to separate the signal into the first signal and the second signal using a band pass filter configured to pass the commercial power supply frequency band.

In one example, the control unit is configured to separate the signal into the first signal and the second signal using a band stop filter configured to pass a frequency band other than the commercial power supply frequency band.

In one example, the piezoelectric film is made of a fluorine-based resin.

In one example, a total light transmittance of the touch sensor is 80% or more.

A display device according to an aspect of the present invention includes: the input device; a display panel overlapping a surface of the touch sensor opposite to a surface to be touched by a finger, and configured to display an image; and a drive unit configured to drive the display panel.

According to an aspect of the present invention, it is possible to detect a touch position and a pressing force substantially simultaneously with high sensitivity.

Although the embodiments have been described above with reference to the drawings, the present invention is not limited to the above examples. It will be apparent to those skilled in the art that various modifications and variations can be made within the scope of the appended claims. It is understood that these modifications and variations also belong to the technical scope of the present invention. In addition, the components in the embodiments may be optionally combined without departing from the spirit of the present invention.

The present application is based upon and claims the benefit of priority from Japanese Patent Application No. 2023-070738, filed on Apr. 24, 2023, and Japanese Patent Application No. 2023-131002, filed on Aug. 10, 2023. The contents described in the specification and the drawings of the present application are all incorporated herein by reference.

### [INDUSTRIAL APPLICABILITY]

One aspect of the present invention is suitable for a touch input device.

### [REFERENCE SIGNS LIST]

1 Display device
10 Housing
20 Touch sensor
201 Protective film
202 Base material
203 First detection conductor
203A Base material
203B ITO electrode (row-electrode)
203C Base material
203D ITO electrode (column-electrode)
203E Linear portion
203F Non-linear portion
203G Linear portion
203H Non-linear portion
203I Base material
2031 First portion
2032 Second portion
2032' Second portion
2033 Insulating layer
204 Piezoelectric film
205 Second detection conductor
30 Display panel
40 Circuit
401 Amplification unit
402 Multiplexer
403 AD conversion unit
404 Signal processing unit
405 Controller

## Claims

1. An input device comprising a touch sensor and a control unit, wherein
the touch sensor includes:
a piezoelectric film;
a first detection conductor facing the piezoelectric film, and made up of divided electrodes having a plurality of electrode portions electrically insulated from each other; and
a second detection conductor facing the first detection conductor, and disposed on a side opposite to the first detection conductor with respect to the piezoelectric film, and
the control unit is configured to:
separate a signal detected from the first detection conductor with the second detection conductor used as a reference potential into a first signal in a commercial power supply frequency band and a second signal in a frequency band other than the commercial power supply frequency band; and
detect a touch position using the first signal, and detect a pressing force using the second signal.

2. The input device according to claim 1, wherein
the control unit is configured to calculate an envelope signal of the first signal, and when a value of the envelope signal exceeds a threshold value, detect a position of a corresponding one of the divided electrodes to the envelope signal as the touch position.

3. The input device according to claim 1 or 2, wherein
the control unit is configured to detect a pressing force on each of the divided electrodes based on information in which a value of the second signal is associated with the pressing force.

4. An input device comprising a touch sensor and a control unit, wherein
the touch sensor includes:
a piezoelectric film;
a first detection conductor facing the piezoelectric film, and including a plurality of first electrodes linearly disposed along a first straight line and a plurality of second electrodes linearly disposed along a second straight line, the plurality of first electrodes and the plurality of second electrodes being electrically insulated from each other; and
a second detection conductor facing the first detection conductor, and disposed on a side opposite to the first detection conductor with respect to the piezoelectric film, and
the control unit is configured to:
separate a signal detected from the first detection conductor with the second detection conductor used as a reference potential into a first signal in a commercial power supply frequency band and a second signal in a frequency band other than the commercial power supply frequency band; and
detect a touch position using the first signal, and detect a pressing force using the second signal.

5. The input device according to claim 4, wherein
the control unit is configured to calculate an envelope signal of the first signal, and when a value of the envelope signal exceeds a threshold value, detect, as the touch position, a position of a region corresponding to the envelope signal within a region covered by the plurality of first electrodes and the plurality of second electrodes.

6. The input device according to claim 5, wherein
the control unit is configured to detect a pressing force on the region corresponding to the envelope signal based on information in which a value of the second signal is associated with the pressing force.

7. The input device according to any one of claims 1 to 6, wherein
the first detection conductor is disposed closer to a surface of the touch sensor than the second detection conductor, the surface being touched by a finger.

8. The input device according to any one of claims 1 to 7, wherein
the control unit is configured to separate the signal into the first signal and the second signal using a band pass filter configured to pass the commercial power supply frequency band.

9. The input device according to any one of claims 1 to 7, wherein
the control unit is configured to separate the signal into the first signal and the second signal using a band stop filter configured to pass a frequency band other than the commercial power supply frequency band.

10. The input device according to any one of claims 1 to 9, wherein
the piezoelectric film is made of a fluorine-based resin.

11. The input device according to any one of claims 1 to 10, wherein
a total light transmittance of the touch sensor is 80% or more.

12. A display device comprising:
the input device described in claim 11;
a display panel overlapping a surface of the touch sensor opposite to a surface to be touched by a finger, and configured to display an image; and
a drive unit configured to drive the display panel.
